Europäisches Patentamt

European Patent Office

Office européen des brevets

(11) Veröffentlichungsnummer: **0 041 112**
**B1**

(12) **EUROPÄISCHE PATENTSCHRIFT**

(45) Veröffentlichungstag der Patentschrift: **26.06.85**

(21) Anmeldenummer: **81102372.0**

(22) Anmeldetag: **28.03.81**

(51) Int. Cl.⁴: **F 02 D 41/18, G 01 F 1/28**

(54) **Luftmassenmesseinrichtung bei einer Brennkraftmaschine.**

(30) Priorität: **04.06.80 DE 3021117**

(43) Veröffentlichungstag der Anmeldung:
**09.12.81 Patentblatt 81/49**

(45) Bekanntmachung des Hinweises auf die
Patenterteilung:
**26.06.85 Patentblatt 85/26**

(84) Benannte Vertragsstaaten:
**DE FR GB SE**

(56) Entgegenhaltungen:
**DE-A-2 135 824**
**DE-A-2 455 482**
**DE-A-2 816 257**

(73) Patentinhaber: **ROBERT BOSCH GMBH**
**Postfach 50**
**D-7000 Stuttgart 1 (DE)**

(72) Erfinder: **Horbelt, Michael, Ing. grad.**
**Memelweg 1**
**D-7141 Schwieberdingen (DE)**
Erfinder: **Arnold, Herbert, Ing. grad.**
**Hesselstrasse 49**
**D-7147 Eberdingen (DE)**
Erfinder: **Winkelmann, Lothar, Ing. grad.**
**Reichenberger Strasse 23**
**D-7140 Ludwigsburg (DE)**

Courier Press, Leamington Spa, England.

## Beschreibung

### Stand der Technik

Im Hinblick auf eine exakte Kraftstoffzumessung kommt dem genauen Erfassen der angesaugten Luftmenge eine große Bedeutung zu. Ein bekannter Luftmassenmesser besitzt eine außermittig gelagerte Stauklappe und die Auslenkung dieser Stauklappe ist ein Maß für die von der Brennkraftmaschine angesaugte Luftmasse, entsprechend der wiederum die Kraftstoffmenge zugemessen wird. Die Stauklappe besitzt zwangsläufig eine gewisse Trägheit und die daraus resultierenden Einschwingvorgänge bei plötzlichen Auslenkungen verfälschen das Meßsignal.

Bei der in der DE—A—28 16 257 beschriebenen Regelvorrichtung wird versucht, dieses Problem mit Hilfe eines RC-Tiefpasses zu lösen. Bei dieser Glättungseinrichtung ist es nur möglich, jeden Anteil des angelieferten Signals in der gleichen Art und Weise zu dämpfen. Es ist also bei diesem RC-Tiefpaß nicht möglich, zwischen ansteigenden und abfallenden Anteilen des Signals oder zwischen langsamen und schnellen Änderungen des Signals zu unterscheiden.

Bei der in der DE—A—24 55 482 beschriebenen Kraftstoffeinspritzung wird versucht, das Problem der Verfälschung des Meßsignals mit Hilfe einer Glättungseinrichtung zu lösen, bei der ansteigende und abfallende Anteile des angelieferten Signals auf verschiedene Art und Weise gedämpft werden. Auch bei dieser Glättungseinrichtung ist es jedoch nicht möglich, zwischen langsamen und schnellen Änderungen des zu dämpfenden Signals zu unterscheiden.

### Vorteile der Erfindung

Die erfindungsgemäße Luftmassenmeßeinrichtung mit den Merkmalen der unabhängigen Patentansprüche hat die Aufgabe, die bei plötzlichen Auslenkungen der Stauklappe auftretende Verfälschung des Meßsignals so zu dämpfen, daß möglichst weiche Übergänge zwischen unterschiedlichen Lastzuständen erzielbar sind, ohne jedoch dabei die Reaktionsgeschwindigkeit der gesamten Einrichtung zu beeinflussen.

Dies wird dadurch erreicht, daß zwischen langsamen und schnellen Änderungen des zu dämpfenden Signals unterschieden und entsprechend verschiedenartig reagiert wird. Dabei ist die Einrichtung einfach in ihrem Aufbau und somit angesichts des rauhen Betriebs im Kraftfahrzeug äußerst zuverlässig.

### Zeichnung

Ausführungsbeispiele der Erfindung sind in der Zeichnung dargestellt und in der nachfolgenden Beschreibung näher erläutert. Es zeigen Figur 1 eine grob schematische Darstellung einer Brennkraftmaschine mit Kraftstoffeinspritzung, Figur 2 ein erstes Ausführungsbeispiel der Erfindung mit einem zugehörigen Signalbild und Figure 3 ein zweites Ausführungsbeispiel, dem ebenfalls ein Impulsbild zugeordnet ist.

### Beschreibung der Ausführungsbeispiele

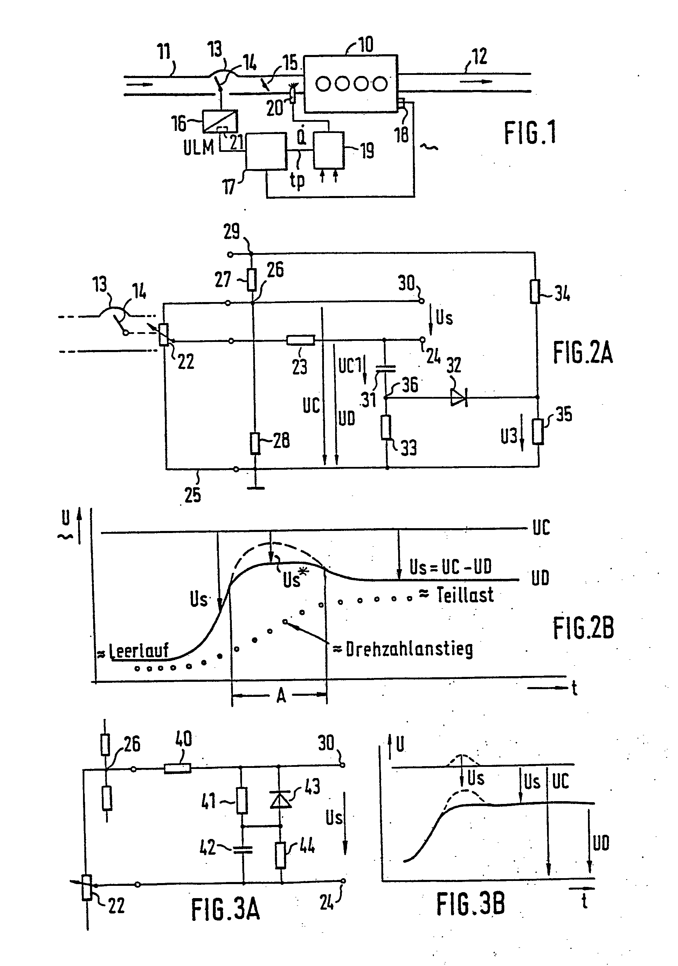

Figur 1 zeigt in prinzipieller Darstellung eine Brennkraftmaschine zusammen mit einem Einspritzsystem. Mit 10 ist die Brennkraftmaschine selbst bezeichnet, mit 11 ihr Luftansaugrohr und mit 12 die Abgasleitung. Im Ansaugrohr sind hintereinander eine Luftmassenmeßeinrichtung 13 mit einer Stauklappe 14 sowie eine Drosselklappe 15 gezeichnet. Die Achse der Stauklappe 14 ist mit einer Signalerzeugerstufe 16 gekoppelt, die abhängig von der Auslenkung der Stauklappe 14 eine Ausgangsspannung abgibt. Ein nachfolgendes Zeitglied 17 erzeugt abhängig vom Ausgangssignal der Signalerzeugerstufe 16 sowie von einem Drehzahlmesser 18 eine Signalfolge mit der Impulsdauer tp als nicht korrigierter Einspritzzeit. Über eine nachfolgende Korrekturstufe 19 gelangt dann diese Signalfolge zu Einspritzventilen 20 im Luftansaugrohr.

In der Signalerzeugerstufe 16 ist ausgangsseitig ein kleiner Bereich mit 21 bezeichnet. Er stellt das der Signalerzeugerstufe zugeordnete Dämpfungsglied dar. Diese räumliche Zuordnung ist jedoch nicht zwingend, da lediglich wesentlich ist, daß dieses Dämpfungsglied im Signalfluß des Luftmassensignals liegt und vor dessen Verarbeitung im Zeitglied 17 zur Wirkung kommt.

Figur 2a zeigt ein erstes Beispiel eines Dämpfungsgliedes. Die Achse der Stauklappe 14 der Luftmassenmeßeinrichtung 13 ist mit dem Schleifer eines Potentiometers 22 gekoppelt, dessen Mittelabgriff über einen Widerstand 23 zu einer Ausgangsklemme 24 geführt ist. Das Potentiometer liegt dabei zwischen einer Masseleitung 25 und der Verbindungsstelle 26 eines aus zwei Widerständen 27 und 28 gebildeten Spannungsteilers parallel zu den Betriebsspannungsanschlüssen 29 und 25. Die Verbindungsstelle 26 ist zusätzlich zu einem Anschlußpunkt 30 geführt. Das eigentliche Dämpfungsglied bilden ein Kondensator 31, eine Diode 32 sowie drei Widerstände 33, 34, und 35. Kondensator 31 und Widerstand 33 liegen in Reihe zwischen dem Anschlußpunkt 24 und der Masseleitung 25. Ihr Verbindungspunkt 36 ist über die Diode 32 mit der Verbindungsstelle der beiden Widerstände 34 und 35 gekoppelt, die zwischen der Plusleitung 29 und der Masseleitung 25 angeordnet sind, Wesentlich für das Verständnis ist noch, daß der Widerstand 33 wesentlich hochohmiger ist als die beiden Widerstände 23 und 35.

In das Diagramm von Figure 2a sind verschiedene Spannungen eingetragen: Us, UC1, UD, UC und U3. Die gleichen Spannungsangaben finden sich in dem Diagramm von Figur 2b. Dort ist ein Lastsprung von Leerlauf nach Teillast angedeutet und gepunktet der entsprechende Drehzahlanstieg. Die ausgezogene Linie zeigt die Spannung UD am Anschlußpunkt 24, während gestrichelt gezeichnet das entsprechende Spannungssignal ohne Dämpfungseinrichtung dargestellt ist. Sehr deutlich erkennt man das Abflachen des Überschwingers und somit die Verkleinerung des zu fehlerhafter Kraftstoffzumessung führenden Überschwingers.

Im stationären Zustand ist der Kondensator 31 auf eine Spannung aufgeladen, die derjenigen am Schleifer des Potentiometers 22 entspricht.

Im Beschleunigungsfall erfährt diese Eingangsspannung innerhalb kurzer Zeit einen höheren Hub, als die durch das Verhältnis der beiden Widerstände 34 und 35 eingestellte Spannung. Dadurch wird die Diode 32 leitend und die Steuerspannung UD am Anschlußpunkt 24 erhöht sich nur noch im Verhältnis von etwa R35/(R35+R23).

Diese Bedämpfung der Spannung am Anschlußpunkt 24 klingt nach einer vorgegebenen Funktion abhängig von der Zeitkonstante der RCD-Anordnung ab.

Bei langsamem Signalanstieg erfolgt eine stetige Umladung des Kondensators 31 über den Widerstand 33, so daß die Dämpfung nicht wirksam wird.

Mit Hilfe der in Figur 2 dargestellten Schaltungsanordnung läßt sich unabhängig vom jeweiligen Luftdurchsatz vor dem Beschleunigen eine konstante Maximalspannungsänderung als sogenannter Vorhalt über das Spannungsteilerverhältnis der Widerstände 34 und 35 einstellen.

Wird keine über die Diode 32 einkoppelbare Konstantspannung gewünscht, sondern soll sie vom Luftdurchsatz abhängen, dann empfiehlt sich die Schaltungsanordnung nach Figur 3a. Gleiche Teile und Anschlußpunkte der Gegenstände von Figur 2a und 3a sind mit gleichen Bezugsziffern versehen.

Zwischen der Verbindungsstelle 26 und dem Anschlußpunkt 30 liegt beim Gegenstand von Figur 3a ein Widerstand 40. Zwei Reihenschaltungen von Widerstand 41 und Kondensator 42 sowie Diode 43 und Widerstand 44 liegen zwischen den Anschlußpunkten 30 und 24, wobei die jeweiligen Verbindungsstellen dieser vier Bauelemente miteinander unmittelbar verbunden sind.

Im Falle eines Lastsprunges nach höheren Werten verringert sich sprungartig die Spannung zwischen der Verbindungsstelle 26 und dem Schleifer des Potentiometers 20. Dieser Spannungsabfall wird über den Widerstand 40 übertragen, was zu einem Leitendwerden der Diode 43 führt und der Kondensator 42 infolgedessen Energie abgeben kann. Dies wiederum führt zu einem verminderten Spannungsabfall US entsprechend der Darstellung in Figur 3b.

Je nach Anwendungsfall kann die Schaltungsanordnung nach Figur 3a vorteilhafter gegenüber derjenigen nach Figur 2a sein, da die jeweilige Spannungsänderung beim Beschleunigen aus einem höheren Lastzustand heraus kleiner ist und sich somit eine spezielle Anpassung ergibt. Trotzdem läßt sich kaum eine Wertung darüber vornehmen, welche der beiden angegebenen Schaltungsanordnungen im Einzelfall zweckmäßiger ist, da es auf die jeweiligen Besonderheiten ankommt. Beiden gemeinsam ist jedoch, daß Fehler aufgrund der Trägheit der Staubklappe 14 im Beschleunigungsfalle vermieden werden, was eine exakte Kraftstoffzumessung erlaubt.

## Patentansprüche

1. Luftmassenmeßeinrichtung bei einer Brennkraftmaschine mit einer im Luftansaugrohr (11) angeordneten Stauklappe (14) und einer damit gekoppelten Signalerzeugerstufe (16), die ein Potentiometer (22) nachgeschaltetem RC-Glied als Dämpfungsglied mit umfaßt, dadurch gekennzeichnet, daß das Dämpfungsglied (21) aus einer ausgehend vom Potentiometerabgriff über einen Widerstand (23) gegen ein Spannungspotential geschalteten Reihenschaltung eines Kondensators (31) und eines Widerstands (33) besteht, deren Verbindungspunkt über eine Diode (32) mit einem Bezugspotential gekoppelt ist.

2. Luftmassenmeßeinrichtung nach Anspruch 1, dadurch gekennzeichnet, daß das Bezugspotential konstant ist.

3. Luftmassenmeßeinrichtung nach Anspruch 1, dadurch gekennzeichnet, daß das Bezugs-potential vom Ausgangssignal des Impulser-zeugers abgeleitet ist.

4. Luftmassenmeßeinrichtung bei einer Brennkraftmaschine mit einer im Luftansaugrohr (11) angeordneten Stauklappe (14) und einer damit gekoppelten Signalerzeugerstufe (16), die ein Potentiometer (22) mit nachgeschaltetem RC-Glied als Dämpfungsglied mit umfaßt, dadurch gekennzeichnet, daß das Dämpfungsglied (21) zwischen Ausgangsanschlüssen (24 und 30) der Signalerzeugerstufe (16) angeordnet ist und ausgehend vom Potentiometerabgriff aus einer Parellelschaltung zweier Reihenschaltungen eines Kondensators (42) und eines Widerstands (41) sowie eines Widerstands (44) und einer Diode (43) besteht, wobei die Verbindungspunkte der einzelnen Elemente zusammengeschaltet sind.

## Revendications

1. Installation de mesure de la masse d'air dans un moteur à combustion interne ayant un volet de retenue (14) prévu dans la tubulure d'aspiration d'air (11), et un étage générateur de signal (16) couplé à ce volet, étage qui comprend un potentiomètre (22) suivi d'un élément RC comme élément d'amortissement, caractérisée en ce que l'élément d'amortissement se compose d'un montage en série d'un condensateur (31) et d'une résistance (33), partant du curseur d'un potentiomètre, avec une résistance (23), contre un potentiel de tension, le point de jonction du condensateur et de la résistance étant couplé à un potentiel de référence par l'intermédiaire d'une diode (32).

2. Installation de mesure de la masse d'air selon la revendication 1, caractérisée en ce que le potentiel de référence est constant.

3. Installation de mesure de la masse d'air selon la revendication 1, caractérisée en ce que le potentiel de référence est dérivé du signal de sortie du générateur d'impulsions.

4. Installation de mesure de la masse d'air dans un moteur à combustion interne ayant un volet de retenue (14) monté dans la tubulure d'aspiration d'air (11) et un étage générateur de signal (16) couplé à ce volet, et qui comprend un potentiomètre (22) suivi d'un élément RC comme élément d'amortissement, caractérisée en ce que l'élément d'amortissement (21) est prévu entre les bornes de raccordement (24 et 30) de sortie de l'étage générateur de signal (16) et, partant du curseur du potentiomètre, se compose d'un montage en parallèle de deux montages en série d'un condensateur (42) et d'une résistance (41) ainsi que d'une résistance (44) et d'une diode (43), les points de jonction des différents composants étant réunis.

**Claims**

1. Air rate meter in an internal combustion engine, provided with a baffle plate (14) arranged in the air intake pipe (11) and a signal generator stage (16) which is coupled to the baffle plate and which also comprises a potentiometer (22) followed by an RC section as an attenuating section, characterised in that the attenuating section (21) consists of a series circuit, connected from the potentiometer tap via a resistor (23) to a voltage potential, of a capacitor (31) and a resistor (33), the junction of which is coupled via a diode (32) to a reference potential.

2. Air rate meter according to Claim 1, characterised in that the reference potential is constant.

3. Air rate meter according to Claim 1, characterised in that the reference potential is derived from the output signal of the pulse generator.

4. Air rate meter in an internal combustion engine, provided with a baffle plate (14) which is arranged in the air intake pipe (11) and a signal generator stage (16) which is coupled to the baffle plate and which also comprises a potentiometer (22) followed by an RC section as an attenuating section, characterised in that the attenuating section (21) is arranged between output connections (24 and 30) of the signal generator stage (16) and, starting from the potentiometer tap, consists of two series circuits of a capacitor (42) and a resistor (41) and of a resistor (44) and a diode (43) being connected in parallel with each other, the junctions between the individual elements being connected together.

FIG.1

FIG.2A

FIG.2B

FIG.3A

FIG.3B